(19) **Europäisches Patentamt European Patent Office Office européen des brevets**

(11) **EP 3 617 284 B1**

(12) **EUROPEAN PATENT SPECIFICATION**

(45) Date of publication and mention
of the grant of the patent:
**19.02.2025 Bulletin 2025/08**

(51) International Patent Classification (IPC):
***C09D 11/328*** (2014.01)      ***C09D 11/54*** (2014.01)
***D06P 5/30*** (2006.01)

(21) Application number: **19193922.2**

(52) Cooperative Patent Classification (CPC):
**C09D 11/328; C09D 11/54; D06P 5/30**

(22) Date of filing: **27.08.2019**

(54) **INK JET PRINTING PENETRANT, INK JET PRINTING INK SET, AND INK JET PRINTING METHOD**

TINTENSTRAHLDRUCKEINDRINGUNGSMITTEL, TINTENSTRAHLDRUCKTINTENSATZ UND
TINTENSTRAHLDRUCKVERFAHREN

PÉNÉTRANT D'IMPRESSION À JET D'ENCRE, ENSEMBLE D'ENCRE D'IMPRESSION À JET
D'ENCRE ET PROCÉDÉ D'IMPRESSION À JET D'ENCRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.08.2018 JP 2018159243**

(43) Date of publication of application:
**04.03.2020 Bulletin 2020/10**

(73) Proprietor: **Seiko Epson Corporation
Tokyo 160-8801 (JP)**

(72) Inventors:
• **SAKUMA, Daisuke
Suwa-shi, Nagano 392-8502 (JP)**

• **KOMATSU, Hidehiko
Suwa-shi, Nagano 392-8502 (JP)**
• **NOGUCHI, Hiromi
Suwa-shi, Nagano 392-8502 (JP)**

(74) Representative: **Lewis Silkin LLP
Arbor
255 Blackfriars Road
London SE1 9AX (GB)**

(56) References cited:
**EP-A1- 2 311 917      JP-A- 2005 188 007
JP-A- 2010 255 133      JP-A- H02 112 489
JP-A- H11 269 783      US-A1- 2015 116 418**

**Description**

BACKGROUND

1. Technical Field

The present disclosure relates to an ink jet printing penetrant, an ink jet printing ink set, and an inkjet printing method.

2. Related Art

Printing in which an image is recorded on a cloth, such as a woven fabric, a knitted fabric, or a non-woven cloth, has been known. In recent years, for example, in order to efficiently use an ink composition (hereinafter, also referred to as "ink" in some cases) used for printing, also in the printing, the use of an ink jet recording method has been investigated. In ink jet printing using this ink jet recording method, an ink in the form of liquid droplets is ejected from a nozzle of an ink jet head and is adhered to a cloth, so that an ink coating film is formed on the cloth as an image.

In the ink jet printing, an ink jet printing color ink (hereinafter, also referred to as "color ink" in some cases) containing a dye as a colorant is used in some cases. In the ink jet printing as described above, when the color ink is allowed to penetrate to a rear surface of a cloth so as to form images having the same pattern on a front and a rear surface thereof with no color difference therebetween, a penetrant may be used in some cases. In the case described above, a method using a penetrant which contains 20 percent by mass or more of a compound, such as 2-pyrrolidone, having a lactam structure has been proposed (for example, see JP-A-2016-141802).

In the ink jet printing which uses the ink jet printing color ink containing a dye, the reduction in color difference between the front and the rear surfaces of the cloth is further required. Document JP2010255133A describes a pretreatment process for use with printing fabrics. The ink contains a dye, and a water-soluble solvent. The pretreatment described in this document is used to prevent the ink spreading onto the fabric. The pretreatment liquid contains a glycol-based solvent.

SUMMARY

The present disclosure provides an ink jet printing penetrant which is used to penetrate an ink jet printing color ink containing a dye in a cloth. In addition, the penetrant described above comprises at least one glycol-based solvent having an HSP value of 13.6 or more and water, a content of the glycol-based solvent with respect to a total mass of at least one organic solvent contained in the above ink jet printing penetrant is 95 percent by mass or more, and the total content of the glycol-based solvent and the other organic solvent with respect to a total mass of the ink jet printing penetrant is 25 percent by mass or more; the glycol-based solvent has a standard boiling point of 243°C or less; the number of the glycol-based solvents is at least two; and the penetrant further comprises a surfactant, and the content of the surfactant is 0.1 to 1.5 percent by mass with respect to the total mass of the penetrant.

BRIEF DESCRIPTION OF THE DRAWINGS

FIGURE is a schematic perspective view showing a printing apparatus which performs an ink jet printing method according to this embodiment.

DESCRIPTION OF EXEMPLARY EMBODIMENTS

Hereinafter, several embodiments of the present disclosure will be described. The following embodiments are each described to explain one example of the present disclosure. The present disclosure is not limited to the following embodiments and includes various changed and/or modified embodiments performed within the range in which the scope of the present disclosure is not changed. In addition, all the structures which will be described below are not always required to be essential structures of the present disclosure.

One aspect of an ink jet printing penetrant according to this embodiment is an ink jet printing penetrant which is used to penetrate an ink jet printing color ink containing a dye in a cloth and which comprises at least one glycol-based solvent having an HSP value of 13.6 or more and water. In the ink jet printing penetrant described above, the content of the glycol-based solvent with respect to a total mass of at least one organic solvent contained in the ink jet printing penetrant is 95 percent by mass or more, and the glycol-based solvent has a standard boiling point of 243°C or less.

One aspect of an ink jet printing ink set according to this embodiment is an ink set which comprises an ink jet printing color ink containing at least one dye and the ink jet printing penetrant according to this embodiment.

One aspect of an ink jet printing method according to this embodiment is an ink jet printing method which comprises a step of performing printing by adhesion of an ink jet printing color ink containing a dye and the ink jet printing penetrant according to this embodiment to the cloth.

Hereinafter, as for the ink jet printing penetrant, the ink jet printing ink set, and the ink jet printing method according to this embodiment, the structure of a printing apparatus which can realize the ink jet printing method; an ink jet printing color ink (hereinafter, also referred to as "color ink" or "ink" in some cases); an ink jet printing penetrant (hereinafter, also referred to as "penetrant" in some cases); an ink jet printing ink set (hereinafter, also referred to as "ink set" in some cases); a cloth on which ink jet printing is performed; and an ink jet printing method will be described in this order.

1. Printing Apparatus

First, one example of a printing apparatus used in this embodiment will be described with reference to FIGURE. In addition, the printing apparatus used in this embodiment is not limited to the following apparatus.

In addition, as the printing apparatus used in this embodiment, an on-carriage type printer in which an ink cartridge is mounted in a carriage will be described by way of example. In this embodiment, the printing apparatus is not limited to the on-carriage type printer and may also be an off-carriage type printer in which an ink cartridge is fixed outside.

In addition, the printer used for the following illustration is a serial printer in which a recording ink jet head is mounted on a carriage moving in a predetermined direction, and liquid droplets are ejected on a recording medium when the ink jet head moves in association with the movement of the carriage. The printing apparatus used in the present disclosure is not limited to a serial printer and may also be a line printer. The line printer is a printer in which an ink jet head is formed wider than the width of a recording medium, and liquid droplets are ejected thereon without the movement of the ink jet head.

In FIGURE used for the following illustration, in order to facilitate the recognition of individual members, the reduction scales thereof are appropriately changed.

As the printing apparatus, for example, an ink jet-type printer (hereinafter, also referred to as "printer" in some cases) mounting an ink jet head shown in FIGURE may be mentioned. As shown in FIGURE, a printer 1 includes an ink jet head 2, ink cartridges 3, a carriage 4, a platen 5, a heating mechanism 6, a carriage moving mechanism 7, a medium transport mechanism 8, a guide rod 9, a linear encoder 10, and a control portion CONT.

The control portion CONT controls the operation of the entire printer 1. The carriage 4 mounts the ink jet head 2 which will be described later and also detachably mounts the ink cartridges 3 each of which supplies an ink or a penetrant to the ink jet head 2. The platen 5 is provided under the ink jet head 2 to transport a cloth M functioning as a recording medium. The heating mechanism 6 heats the cloth M. The carriage moving mechanism 7 moves the carriage 4 in a medium width direction of the cloth M. The medium transport mechanism 8 transports the cloth M in a medium transport direction. In this case, the medium width direction indicates a main scanning direction which is an operation direction of the ink jet head 2. The medium transport direction is a direction orthogonal to the main scanning direction and is a sub-scanning direction along which the cloth M is transported.

The ink jet head 2 is a unit to adhere the ink and the penetrant to the cloth M and includes a plurality of nozzles (not shown), each of which ejects the ink or the penetrant, along its surface facing the cloth M to which the ink is adhered. Those nozzles are arranged in lines so that a nozzle surface is formed along a nozzle plate surface.

As a method to eject the ink or the penetrant from the nozzle, for example, there may be mentioned a piezoelectric method in which a pressure and a recording information signal are simultaneously applied to the ink or the penetrant by a piezoelectric element to eject liquid droplets of the ink or the penetrant for recording.

In FIGURE, the ink cartridges 3 each of which supplies the ink or the penetrant to the ink jet head 2 are independent from each other, and the number thereof is four. Three out of the four cartridges are filled with different types of color inks, and one out of the four cartridges is filled with the penetrant. The ink cartridges 3 are detachably mounted to the ink jet head 2. In the example shown in FIGURE, although the number of the cartridges is four, the number is not limited thereto, and a desired number of cartridges may be mounted.

The carriage 4 is fitted so as to be supported by the guide rod 9 functioning as a support member provided in the main scanning direction and is moved by the carriage moving mechanism 7 in the main scanning direction along the guide rod 9. In the example shown in FIGURE, although the carriage 4 is moved in the main scanning direction, the carriage is not limited thereto and may also be moved in the sub-scanning direction besides in the main scanning direction.

The heating mechanism 6 may be provided at any position as long as the cloth M can be heated. In the example shown in FIGURE, the heating mechanism 6 is provided above the platen 5 at a position facing the ink jet head 2. When the heating mechanism 6 is provided at the position which faces the ink jet head 2, positions of the cloth M to which the inks and the penetrant are adhered can be reliably heated, and the inks and the penetrant adhered to the cloth M can be efficiently dried.

As the heating mechanism 6, for example, there may be mentioned a print heater mechanism in which the cloth M is heated by direct contact with a heat source, a mechanism in which infrared rays or microwaves which are electromagnetic waves having a maximum wavelength of approximately 2,450 MHz are irradiated on the cloth M, or a drier mechanism in which hot wind is applied to the cloth M.

The heating of the cloth M by the heating mechanism 6 is performed before or when the liquid droplets ejected from the nozzles of the ink jet head 2 are adhered to the cloth M. The control of various heating conditions, such as a timing at which the heating is performed, a heating temperature, and a heating time, is performed by the control portion CONT.

In view of improvement in wet spreadability, penetration property, and drying property of the ink, ejection stability thereof, and the like, the heating of the cloth M by the heating mechanism 6 is performed so as to maintain the cloth M in a temperature range of 35°C to 65°C. In this case, the temperature of heating the cloth M indicates a surface temperature of a recording surface of the cloth M during the heating.

The printer 1 may also include, besides the heating mechanism 6, a second heating mechanism (not shown). In this case, the second heating mechanism is provided at a downstream side in the transport direction of the cloth M than the heating mechanism 6. After the cloth M is heated by the heating mechanism 6, that is, after the inks and the penetrant ejected from the nozzles are adhered to the cloth M to form an image thereon, the second heating mechanism heats the cloth M. Accordingly, the drying properties of the inks and the penetrant adhered to the cloth M are improved. As the second heating mechanism, any one of the mechanisms described in the heating mechanism 6 may be used. The heating by the second heating mechanism is preferably performed so that the cloth M is maintained in a temperature range of 100°C to 200°C.

The linear encoder 10 detects the position of the carriage 4 in the main scanning direction by a signal. The signal detected by the linear encoder 10 is sent to the control portion CONT as position information. The control portion CONT recognizes a scan position of the ink jet head 2 based on the position information from the linear encoder 10 and controls a recording operation, that is, an ejection operation and the like, by the ink jet head 2. In addition, the control portion CONT is configured to be able to perform a variable control of the moving rate of the carriage 4.

2. Ink Jet Printing Color Ink

An ink jet printing color ink used in this embodiment contains at least one dye. The ink jet printing color ink used in this embodiment forms an ink jet printing ink set together with the ink jet printing penetrant according to this embodiment. In addition, the ink jet printing color ink used in this embodiment is used to be adhered to a cloth together with the ink jet printing penetrant according to this embodiment for printing.

Hereinafter, the ink jet printing color ink (hereinafter, also referred to as "color ink" in some cases) used in this embodiment will be described.

2.1. Dye

In this embodiment, the ink jet printing color ink contains a dye as a colorant. As the dye, for example, there may be mentioned a dispersive dye, an acidic dye, a basic dye, a direct dye, or a reactive dye.

The dispersive dye is not particularly limited, and for example, there may be mentioned C.I. Disperse Yellow 3, 4, 5, 7, 9, 13, 23, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 108, 114, 116, 118, 119, 122, 124, 126, 135, 140, 141, 149, 160, 162, 163, 164, 165, 179, 180, 182, 183, 184, 186, 192, 198, 199, 202, 204, 210, 211, 215, 216, 218, 224, 227, 231, or 232; C.I. Disperse Orange 1, 3, 5, 7, 11, 13, 17, 20, 21, 25, 29, 30, 31, 32, 33, 37, 38, 42, 43, 44, 45, 46, 47, 48, 49, 50, 53, 54, 55, 56, 57, 58, 59, 61, 66, 71, 73, 76, 78, 80, 89, 90, 91, 93, 96, 97, 119, 127, 130, 139, or 142; C.I. Disperse Red 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 298, 302, 303, 310, 311, 312, 320, 324, or 328; C.I. Disperse Violet 1, 4, 8, 23, 26, 27, 28, 31, 33, 35, 36, 38, 40, 43, 46, 48, 50, 51, 52, 56, 57, 59, 61, 63, 69, or 77; C.I. Disperse Green 9; C.I. Disperse Brown 1, 2, 4, 9, 13, or 19; C.I. Disperse Blue 3, 7, 9, 14, 16, 19, 20, 26, 27, 35, 43, 44, 54, 55, 56, 58, 60, 62, 64, 71, 72, 73, 75, 79, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211, 214, 224, 225, 257, 259, 267, 268, 270, 284, 285, 287, 288, 291, 293, 295, 297, 301, 315, 330, 333, 359, or 360; or C.I. Disperse Black 1, 3, 10, or 24.

The acidic dye is not particularly limited, and for example, there may be mentioned C.I. Acid Yellow 1, 3, 6, 11, 17, 18, 19, 23, 25, 36, 38, 40, 40:1, 42, 44, 49, 59, 59:1, 61, 65, 67, 72, 73, 79, 99, 104, 159, 169, 176, 184, 193, 200, 204, 207, 215, 219, 219:1, 220, 230, 232, 235, 241, 242, or 246; C.I. Acid Orange 3, 7, 8, 10, 19, 22, 24, 33, 51, 51S, 56, 67, 74, 80, 86, 87, 88, 89, 94, 95, 107, 108, 116, 122, 127, 140, 142, 144, 149, 152, 156, 162, 166, or 168; C.I. Acid Red 1, 6, 8, 9, 13, 18, 27, 35, 37, 52, 54, 57, 60, 73, 82, 88, 97, 97:1, 106, 111, 114, 118, 119, 127, 131, 138, 143, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, or 415; C.I. Acid Violet 17, 19, 21, 42, 43, 47, 48, 49, 54, 66, 78, 90, 97, 102, 109, or 126; C.I. Acid Blue 1, 7, 9, 15, 23, 25, 40, 61:1, 62, 72, 74, 80, 83, 90, 92, 103, 104, 112, 113, 114, 120, 127, 127:1, 128, 129, 138, 140, 142, 156, 158, 171, 182, 185, 193, 199, 201, 203, 204, 205, 207, 209, 220, 221, 224, 225, 229, 230, 239, 258, 260, 264, 277:1, 278, 279, 280, 284, 290, 296, 298, 300, 317, 324, 333, 335, 338, 342, or 350; C.I. Acid Green 9, 12, 16, 19, 20, 25, 27, 28, 40, 43, 56, 73, 81, 84, 104, 108, or 109; C.I. Acid Brown 2, 4, 13, 14, 19, 28, 44, 123, 224, 226, 227, 248, 282, 283, 289, 294, 297, 298, 301, 355, 357, or 413; C.I. Acid Black 1, 2, 3, 24, 24:1, 26, 31, 50, 52, 52:1, 58, 60, 63, 63S, 107, 109, 112, 119, 132, 140, 155, 172, 187, 188, 194, 207, or 222.

The basic dye is not particularly limited, and for example, there may be mentioned C.I. Basic Yellow 1, 2, 13, 19, 21, 25, 32, 36, 40, or 51; C.I. Basic Red 1, 5, 12, 19, 22, 29, 37, 39, or 92; C.I. Basic Blue 1, 3, 9, 11, 16, 17, 24, 28, 41, 45, 54, 65, or 66; or C.I. Basic Black 2 or 8.

The direct dye is not particularly limited, and for example, there may be mentioned C.I. Direct Yellow 8, 9, 10, 11, 12, 22, 27, 28, 39, 44, 50, 58, 86, 87, 98, 105, 106, 130, 137, 142, 147, or 153; C.I. Direct Orange 6, 26, 27, 34, 39, 40, 46, 102, 105, 107, or 118; C.I. Direct Red 2, 4, 9, 23, 24, 31, 54, 62, 69, 79, 80, 81, 83, 84, 89, 95, 212, 224, 225, 226, 227, 239, 242, 243, or 254; C.I. Direct Violet 9, 35, 51, 66, 94, or 95; C.I. Direct Blue 1, 15, 71, 76, 77, 78, 80, 86, 87, 90, 98, 106, 108, 160, 168, 189, 192, 193, 199, 200, 201, 202, 203, 218, 225, 229, 237, 244, 248, 251, 270, 273, 274, 290, or 291; C.I. Direct Green 26, 28, 59, 80, or 85; C.I. Direct Brown 44, 44:1, 106, 115, 195, 209, 210, 212:1, 222, or 223; or C.I. Direct Black 17, 19, 22, 32, 51, 62, 108, 112, 113, 117, 118, 132, 146, 154, 159, or 169.

The reactive dye is not particularly limited, and for example, there may be mentioned C.I. Reactive Yellow 2, 3, 7, 15, 17, 18, 22, 23, 24, 25, 27, 37, 39, 42, 57, 69, 76, 81, 84, 85, 86, 87, 92, 95, 102, 105, 111, 125, 135, 136, 137, 142, 143, 145, 151, 160, 161, 165, 167, 168, 175, or 176; C.I. Reactive Orange 1, 4, 5, 7, 11, 12, 13, 15, 16, 20, 30, 35, 56, 64, 67, 69, 70, 72, 74, 82, 84, 86, 87, 91, 92, 93, 95, 99, or 107; C.I. Reactive Red 2, 3, 3:1, 5, 8, 11, 21, 22, 23, 24, 28, 29, 31, 33, 35, 43, 45, 49, 55, 56, 58, 65, 66, 78, 83, 84, 106, 111, 112, 113, 114, 116, 120, 123, 124, 128, 130, 136, 141, 147, 158, 159, 171, 174, 180, 183, 184, 187, 190, 193, 194, 195, 198, 218, 220, 222, 223, 226, 228, 235, or 245; C.I. Reactive Violet 1, 2, 4, 5, 6, 22, 23, 33, 36, or 38; C.I. Reactive Blue 2, 3, 4, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, or 236; C.I. Reactive Green 8, 12, 15, 19, or 21; C.I. Reactive Brown 2, 7, 9, 10, 11, 17, 18, 19, 21, 23, 31, 37, 43, or 46; or C.I. Reactive Black 5, 8, 13, 14, 31, 34, or 39.

Those dyes mentioned above may be used alone, or at least two types thereof may be used in combination.

In this embodiment, when printing is performed on a polyester cloth or a polyester blend cloth, as a dye used for the ink, a dispersive dye is preferable. Since being a nonionic dye which has a hydrophilic group and an appropriate polar group but has no anionic ionizable group in its molecule, the dispersive dye is preferably used for printing on hydrophobic synthetic fibers of a polyester, a nylon, an acetate, or the like.

As described above, since the dispersive dye is a hydrophobic dye, when the penetrant is hydrophobic, the dispersive dye is dissolved in the penetrant and is not likely to be fixed to a cloth containing a polyester, and a preferable color development cannot be obtained, so that the color development may be degraded in some cases. In addition, in the case of a black color formed by mixing at least two types of dyes, because of the difference in solvent solubility between the dyes to be mixed together, the change in color may occur in some cases. In this embodiment, since being used together with a penetrant containing a hydrophilic solvent which will be described later as a primary solvent, the dispersive dye is suppressed from being dissolved in the penetrant. Accordingly, the color ink is sufficiently fixed to a cloth containing a polyester, and hence, a preferable color development can be obtained. In addition, by the penetration of the ink to a rear surface of the cloth, the degradation in color development at the rear surface is suppressed, and as a result, the color difference between the front and the rear surfaces can be reduced. Furthermore, since the dissolution of the dispersive dye in the solvent of the penetrant is suppressed, in particular, a yellow dye and a red dye, each of which is likely to be dissolved in the solvent of the penetrant, is not likely to be dissolved therein, so that the change in color is not likely to occur between the dyes. Hence, in particular, in a mixed ink, such as a black ink, containing at least two types of dyes, the change in color is reduced.

When the total mass of the ink is regarded as 100 percent by mass, the lower limit of the content of the dye described above is preferably 1.0 percent by mass or more, more preferably 2.0 percent by mass or more, and further preferably 3.0 percent by mass or more. In addition, the upper limit of the content of the dye described above with respect to the total mass of the ink is preferably 15.0 percent by mass or less, more preferably 12.0 percent by mass or less, and further preferably 10.0 percent by mass or less. Since the content of the dye is in the range described above, the chromogenic property is improved, and in addition, since the dye is used together with the penetrant as a set which will be described later, the degradation in color development at the rear surface is suppressed, and the color difference between the front and the rear surfaces can be reduced. In addition, the storage stability and the ejection stability of the ink tend to be improved.

2.2. Water

In this embodiment, the color ink preferably contains water. As the water, purified water, such as ion-exchanged water, ultrafiltration water, reverse osmosis water, or distilled water, or ultrapure water is preferably used. In particular, when being sterilized by ultraviolet irradiation, addition of hydrogen peroxide, or the like, the water mentioned above is preferable since the generation of fungi and bacteria can be prevented for a long period of time. The content of the water in the color ink is not particularly limited and is preferably 40 to 90 percent by mass, more preferably 50 to 80 percent by mass, and further preferably 55 to 70 percent by mass.

2.3. Aqueous Organic Solvent

In this embodiment, the color ink preferably contains an aqueous organic solvent. Since the color ink contains an aqueous organic solvent, the ejection stability of the ink from the nozzle of the ink jet head can be improved. As the aqueous organic solvent described above, for example, there may be mentioned an alcohol, such as methanol, ethanol, or isopropyl alcohol; a ketone or a ketoalcohol, such as acetone or diacetone alcohol; an ether, such as tetrahydrofuran or dioxane; a polyol, such as glycerin, ethylene glycol, diethylene glycol, triethylene glycol, polyethylene glycol, dipropylene glycol, tripropylene glycol, polypropylene glycol, 1,2-propanediol, 1,2-butanediol, 1,2-pentanediol, 1,2-methylpentane-2,4-diol, 1,3-propanediol, 1,4-butanediol, 1,2-hexanediol, 1,5-pentanediol, 3-methyl-1,5-pentanediol, 1,6-hexanediol, 1,2,6-hexanetriol, or pentaerythritol; a lower alkyl ether, such as ethylene glycol monomethyl ether, diethylene glycol monomethyl ether, diethylene glycol monoethyl ether, diethylene glycol monobutyl ether, triethylene glycol monomethyl ether, or triethylene glycol monobutyl ether; or a compound, such as 2-pyrrolidone, N-methyl-2-pyrrolidone, or ε-caprolactam, having a lactam structure. In addition, those aqueous organic solvents may be used alone, or at least two types thereof may be used in combination.

In this embodiment, in order to prevent clogging of the nozzle and blurring, the content of the aqueous organic solvent in the color ink is preferably 5 to 50 percent by mass, more preferably 10 to 45 percent by mass, and further preferably 15 to 40 percent by mass.

2.4. Other Additives

2.4.1. Surfactant

In this embodiment, a surfactant is preferably added to the color ink. The surfactant may be used as a wetting agent which decreases the surface tension of the color ink and which adjust the wettability thereof to the cloth, that is, the penetration property of the color ink in the cloth. In addition, since the color ink contains the surfactant, the stability is increased when the ink is ejected from the ink jet head.

As the surfactant, any one of a nonionic surfactant, an anionic surfactant, a cationic surfactant, and an ampholytic surfactant may be used, or at least two thereof may be used in combination. In addition, among the surfactants, an acetylene glycol-based surfactant, a silicone-based surfactant, or a fluorine-based surfactant may be preferably used.

The acetylene glycol-based surfactant is not particularly limited, and for example, there may be mentioned Surfynol (registered trademark) 104, 104E, 104H, 104A, 104BC, 104DPM, 104PA, 104PG-50, 104S, 420, 440, 465, 485, SE, SE-F, 504, 61, DF37, CT111, CT121, CT131, CT136, TG, GA, or DF110D (trade name, manufactured by Nisshin Chemical Industry Co., Ltd.); Olfine (registered trademark) B, Y, P, A, STG, SPC, E1004, E1010, PD-001, PD-002W, PD-003, PD-004, PD-005, EXP.4001, EXP.4300, EXP.4036, EXP.4051, AF-103, AF-104, AK-02, SK-14, or AE-3 (trade name, manufactured by Nisshin Chemical Industry Co., Ltd.); or Acetynol (registered trademark) E00, E00P, E40, or E100 (trade name, manufactured by Kawaken Fine Chemicals Co., Ltd.).

The silicone-based surfactant is not particularly limited, and for example, a polysiloxane-based compound may be preferably mentioned. Although the polysiloxane-based compound described above is not particularly limited, for example, a polyether modified organosiloxane may be mentioned. As a commercially available product of the polyether modified organosiloxane described above, for example, there may be mentioned BYK (registered trademark)-306, BYK-307, BYK-333, BYK-341, BYK-345, BYK-346, or BYK-348 (trade name, manufactured by BYK Japan KK); or KF-351A, KF-352A, KF-353, KF-354L, KF-355A, KF-615A, KF-945, KF-640, KF-642, KF-643, KF-6020, X-22-4515, KF-6011, KF-6012, KF-6015, or KF-6017 (trade name, manufactured by Shin-Etsu Chemical Co., Ltd.).

As the fluorine-based surfactant, a fluorine modified polymer is preferably used but is not particularly limited, and for example, BYK (registered trademark)-340 (manufactured by BYK Japan KK) may be mentioned.

When the surfactant is added to the color ink, at least two types of the surfactants mentioned above may be used, and the total content thereof with respect to the total mass of the ink is preferably 0.01 to 3 percent by mass, more preferably 0.05 to 2 percent by mass, further preferably 0.1 to 1.5 percent by mass, and particularly preferably 0.2 to 1 percent by mass.

2.4.2. pH Adjuster

In this embodiment, the color ink preferably contains a pH adjuster in order to adjust the pH. Although the pH adjuster is not particularly limited, for example, an acid, a base, a weak acid, a weak base, or an appropriate combination therebetween may be mentioned, and for example, a tertiary alkanolamine, such as triethanolamine or triisopropanolamine, may be mentioned.

In this embodiment, when the pH adjuster is added to the color ink, the addition thereof is appropriately performed while the pH is monitored. For example, the addition amount of the pH adjuster with respect to the total mass of the color ink is preferably 0.01 to 2 percent by mass, more preferably 0.1 to 1 percent by mass, and further preferably 0.2 to 0.5 percent by mass.

2.4.3. Urea

In addition, in this embodiment, as a humidifier or as a dyeing auxiliary agent to improve a dyeing property of the dye, an urea is preferably added to the color ink. As the urea, for example, urea, ethylene urea, tetramethyl urea, thiourea, or 1,3-dimethyl-2-imidazolidinone may be mentioned. When the urea is added, the addition amount thereof may be set to 1 to 10 percent by mass with respect to the total mass of the ink.

2.4.4. Sugar

In this embodiment, in order to suppress solidification and drying of the ink, an appropriate amount of a sugar may be added to the color ink. As the sugar, for example, glucose, mannose, fructose, ribose, xylose, arabinose, galactose, aldonic acid, glucitol (sorbit), maltose, cellobiose, lactose, sucrose, trehalose, or maltotriose may be mentioned. Those sugars, which are not organic solvents, each function as a humidifier, and the content thereof with respect to total mass of the ink may be set to 1 to 10 percent by mass.

2.4.5. Chelating Agent

In this embodiment, in order to remove unnecessary ions in the ink, an appropriate amount of a chelating agent may be added to the color ink. As the chelating agent, for example, there may be mentioned ethylenediaminetetraacetic acid or its salt, such as disodium dihydrogen ethylenediaminetetraacetate, a nitrilotriacetate, a hexametaphosphate, a pyrophosphate, or a metaphosphate. When the chelating agent is added, the content thereof with respect to the total mass of the ink may be set to 0.01 to 1 percent by mass.

2.4.6. Fungicide, Antiseptic Agent

In this embodiment, a fungicide and/or an antiseptic agent may be appropriately added to the color ink. As the fungicide and the antiseptic agent, for example, there may be mentioned sodium benzoate, sodium pentachlorophenate, sodium 2-pyridinethiol-1-oxide, sodium sorbate, sodium dehydroacetate, 1,2-dibenzisothiazoline-3-one, such as PROXEL CRL, BDN, GXL, XL-2, TN, or LV available from by Lonza Japan, or 4-chloro-3-methylphenol, such as Preventol (registered trademark) CMK available from Bayer Holding Ltd.

2.4.7. Others

Besides the components described above, the color ink may also contain additives, such as benzotriazole functioning as an antirust agent, an antioxidant, an UV absorber, an oxygen absorber, and/or an dissolution auxiliary agent, which can be generally used in an ink jet ink. 2.5. Method for Preparing Ink Jet Printing Color Ink

In this embodiment, the color ink is obtained in such a way that the individual components described above are mixed together in an arbitrary order, and if needed, impurities are then removed by filtration or the like. As a mixing method for mixing the individual components, there may be preferably used a method in which the materials are sequentially changed in a container equipped with a stirring device, such as a mechanical stirrer or a magnetic stirrer, followed by stirring and mixing. As a filtration method, if needed, for example, centrifugal filtration or filter filtration may be performed.

2.6. Physical Properties of Ink Jet Printing Color Ink

2.6.1. pH

In this embodiment, the color ink preferably has a pH of 7.0 to 11.0 and more preferably has a pH of 8.0 to 10.5.

When the pH of the color ink is in the range described above, the storage stability of the dye in the ink is improved, and the change in chromogenic property and hue of an image to be obtained is not likely to occur. Hence, the color of a predetermined design can be preferably reproduced.

2.6.2. Surface Tension

In this embodiment, in view of the balance between printing quality and reliability of the ink jet ink, a surface tension of the ink jet printing color ink at 20°C is preferably 20 to 40 mN/m and more preferably 30 to 36 mN/m. Since the surface tension is in the range described above, the ejection stability is excellent in the ink jet printing, and in addition, the ink is likely to uniformly wet spread on and penetrate in the cloth when being adhered to the cloth. Accordingly, the ink is likely to be fixed to the cloth.

In addition, the measurement of the surface tension may be performed using an automatic surface tension meter CBVP-Z (trade name, manufactured by Kyowa Interface Science Co., Ltd.) in such a way that a surface tension at which a platinum plate is wetted with the ink in an environment at 20°C is confirmed. As one method to set the surface tension in the range described above, for example, a method in which, for example, the types of the organic solvent and the surfactant described above, the addition amounts thereof, and the addition amount of water are appropriately adjusted may be mentioned.

2.6.3. Viscosity

In addition, a viscosity of the ink at 20°C is preferably 1.5 to 10 mPa·s, more preferably 2 to 8 mPa·s, and further preferably 4 to 5.5 mPa·s. When the viscosity of the ink at 20°C is set in the range described above, the ink is likely to be fixed to the cloth when being adhered thereto, and the chromogenic property is improved.

The measurement of the viscosity may be performed, for example, by a viscoelastic tester MCR-Series (trade name, manufactured by Anton Paar). In addition, as one method to set the viscosity in the range described above, a method in which, for example, the types of the organic solvent and the surfactant described above, the addition amounts thereof, and the addition amount of water are appropriately adjusted may be mentioned.

3. Ink Jet Printing Penetrant

The ink jet printing penetrant (hereinafter, also referred to as "penetrant" in some cases) according to this embodiment is a penetrant which is used for printing to be adhered to a cloth together with the ink jet printing color ink described above by an ink jet method and which contains at least one glycol-based solvent having an HSP value of 13.6 or more and water. In the ink jet printing penetrant described above, the content of the glycol-based solvent with respect to the total mass of at least one organic solvent contained in the ink jet printing penetrant is 95 percent by mass or more, and the glycol-based solvent has a standard boiling point of 243°C or less.

In this embodiment, since the ink jet printing color ink and the penetrant described above are used as a set, the penetration of the ink in the cloth is appropriately controlled, so that the color difference between the front and the rear surfaces can be reduced. In addition, the degradation in color development, which is caused since the ink is not fixed, can be suppressed. Furthermore, when the ink contains a dispersive dye as the dye, since the dissolution of the dye is suppressed, and the dispersion state of the dye is maintained, the change in color can be suppressed in particular when a mixed ink is used.

Hereinafter, the ink jet printing penetrant according to this embodiment will be described.

3.1. Glycol-Based Solvent Having HSP Value of 13.6 or More and Standard Boiling Point of 243°C or Less

The ink jet printing penetrant according to this embodiment contains at least one organic solvent, and among the at least one organic solvent, a glycol-based solvent having an HSP value of 13.6 or more and a standard boiling point of 243°C or less is contained.

In this case, the "HSP value" indicates Hansen's three-dimensional solubility parameter represented by the following equation (1). Although the unit is not described below, the unit indicates $(cal/cm^3)^{0.5}$.

$$\text{HSP value} = (\delta_D{}^2 + \delta_P{}^2 + \delta_H{}^2)^{0.5}/4.1868^{0.5} \quad (1)$$

Dispersion Term $\delta_D$: energy by dispersion force between molecules
Polar Term $\delta_P$: energy by dipole interaction between molecules
Hydrogen Bond Term $\delta_H$: energy by hydrogen bond between molecules

As an organic solvent which can be used in the ink jet printing penetrant according to this embodiment and which is a glycol-based solvent having an HSP value of 13.6 or more and a standard boiling point of 243°C or less, for example, there may be preferably used ethylene glycol (HSP value: 16.1, standard boiling point: 197°C), 1,3-propanediol (HSP value: 15.5, standard boiling point: 214°C), 1,3-butanediol (HSP value: 13.6, standard boiling point: 207°C), 1,2-propanediol (HSP value: 14.2, standard boiling point: 188°C), 1,4-butanediol (HSP value: 14.1, standard boiling point: 228°C), 2-butyne-1,4-diol (HSP value: 15.1, standard boiling point: 238°C), trimethylolpropane (HSP value: 14.1, standard boiling point: 160°C), or 1,2,3-butanetriol (HSP value: 15.2, standard boiling point: 175°C). Among those organic solvents, in particular, 1,2-propanediol or 1,3-butanediol is preferably used.

The HSP values described above are numerical values each obtained by calculating the above equation (1) with reference to the numerical values of $\delta_D$, $\delta_P$, and $\delta_H$ listed in the data base of International Chemical Identifier.

In the ink jet printing penetrant according to this embodiment, at least two types of the glycol-based solvents mentioned above are preferably contained. Since the penetrant contains at least two types of the above glycol-based solvents, the penetration property of the ink is improved, and the color difference between the front and the rear surfaces and the degradation in color development can be suppressed. According to the points described above, among the above glycol-based solvents, in particular, 1,2-propanediol and 1,3-butanediol are preferably used in combination.

The lower limit of the HSP value of the above glycol-based solvent is preferably 13.8 or more, more preferably 14.0 or more, and further preferably 14.1 or more. In addition, the upper limit of the HSP value of the above glycol-based solvent is preferably 17.0 or less, more preferably 16.5 or less, and further preferably 16.0 or less. Since a hydrophilic solvent, that is, the glycol-based solvent having the HSP value in the range described above, is used, the penetration of the ink in the cloth is more appropriately controlled, and the color difference between the front and the rear surfaces and the degradation in color development can be suppressed. In addition, when the ink contains a dispersive dye as the dye, the solubility of the dispersive dye is adjusted, and the chromogenic property is improved. In addition, since the glycol-based solvent described above is used, the dissolution of the dispersive dye is suppressed, and the chromogenic property is improved. In particular, when a mixed ink which forms a mixed color, such as black, using a plurality of dispersive dyes is used, the generation of the change in color caused by the difference in solvent solubility of the dyes to be mixed together can be suppressed. Furthermore, the dispersion stability of the penetrant is secured, and the storage stability and the ejection stability of the penetrant are improved.

In addition, the lower limit of the standard boiling point of the above glycol-based solvent is preferably 180°C or more, more preferably 190°C or more, and further preferably 200°C or more. The upper limit of the standard boiling point of the above glycol-based solvent is preferably 230°C or less, more preferably 220°C or less, and further preferably 210°C or less. Since the standard boiling point of the above glycol-based solvent is in the range described above, the penetration of the ink in the cloth is more appropriately controlled, and the color difference between the front and the rear surfaces and the degradation in color development can be suppressed. In addition, when the ink contains a dispersive dye as the dye, the dissolution of the dye is suppressed, and in particular, the change in color, which is caused when a mixed ink is used, can be suppressed. Furthermore, the dispersion stability of the penetrant is secured, and the storage stability and the ejection stability thereof are improved.

In addition, even when the HSP value of the above glycol-based solvent is in a preferable range, if the boiling point is excessively high, water is only evaporated and removed during drying, so that an organic solvent-rich state may be unfavorably formed in some cases. In the state as described above, since the dispersive dye is liable to be dissolved in the organic solvent, the degradation in color development may occur in some cases.

In the ink jet printing penetrant according to this embodiment, the total content of the glycol-based solvent having an HSP value of 13.6 or more and a standard boiling point of 243°C or less is 95 percent by mass or more with respect to the total mass of the at least one organic solvent contained in the ink jet printing penetrant and is preferably 97 percent by mass or more, more preferably 99 percent by mass or more, and further preferably 100 percent by mass. Since the content of the glycol-based solvent having an HSP value of 13.6 or more and a standard boiling point of 243°C or less is in the range described above, the penetration of the ink, which is used together with the penetrant, in the cloth is appropriately controlled, and the color difference between the front and the rear surfaces can be reduced. In addition, the degradation in color development, which is caused since the ink is not fixed to the cloth, can be suppressed. Furthermore, when the ink contains a dispersive dye as the dye, the dissolution of the dye is suppressed, and in particular, the change in color, which is caused when a mixed ink is used, can be suppressed.

In the ink jet printing penetrant according to this embodiment, as at least one organic solvent other than the above glycol-based solvent, the aqueous organic solvent described in the above "2.3. Aqueous Organic Solvent" may also be contained. In the case described above, the content of the aqueous organic solvent with respect to the total mass of the organic solvents contained in the ink jet printing penetrant is preferably 5 percent by mass or less, more preferably 3 percent by mass or less, further preferably 1 percent by mass or less, and even further preferably 0 percent by mass.

In addition, in the ink jet printing penetrant, the lower limit of the total content of the above glycol-based solvent and the other organic solvent is 25 percent by mass or more with respect to the total mass of the ink jet printing penetrant, preferably 30 percent by mass or more, and further preferably 35 percent by mass or more. On the other hand, the upper limit of the total content of the above glycol-based solvent and the other organic solvent is preferably 50 percent by mass or less with respect to the total mass of the ink jet printing penetrant according to this embodiment, more preferably 45 percent by mass or less, and further preferably 40 percent by mass or less. Since the solid component of the ink jet printing penetrant according to this embodiment is smaller than that of the color ink described above, the content of the organic solvent can be increased as high as the range described above. As described above, since the content of the organic solvent is set to the value described above or more, nozzle missing is suppressed, and the ejection stability and the penetration property of the ink can be improved. In addition, since the upper limit is set to the value described above or less, the increase in viscosity is suppressed, and the reduction in ejection amount and the degradation in penetration property can be suppressed.

In addition, in the inkjet printing penetrant according to this embodiment, the content of the compound having a lactam structure, which is described in the above "2.3. Aqueous Organic Solvent" as an organic solvent, is preferably 2 percent by mass or less, more preferably 1 percent by mass or less, and further preferably 0 percent by mass. In this embodiment, although enhancing the penetration property of the ink in the cloth, on the other hand, the compound having a lactam structure may degrade the ejection stability due to clogging of the nozzle and/or may cause blurring due to bleeding since the dye is liable to diffuse. In addition, when the dye of the ink is a dispersive dye, the dye is decomposed by the compound described above, and as a result, the change in color may occur in some cases. This change in color is liable to occur when printing is performed using a mixed ink containing at least two types of dyes as the dye or using at least two types of color inks. Hence, in particular, when a dispersive dye is used as the dye of the ink, the penetrant preferably contains no compound having a lactam structure.

3.2. Water

The ink jet printing penetrant according to this embodiment preferably contains water as a primary solvent. This water is a component to be evaporated and removed by drying after the penetrant is adhered to the cloth functioning as a recording medium. As the water, since water similar to that described by way of example in the ink may also be used, the water is not particularly described. The content of the water contained in the penetrant with respect to the total mass of the penetrant is, for example, preferably 40 percent by mass or more, more preferably 50 percent by mass or more, and further preferably 60 percent by mass or more. 3.3. Surfactant

To the ink jet printing panetrant, surfactant is added. Since the surfactant is added, the surface tension of the penetrant is decreased, and the wettability to the cloth can be improved. As the surfactant, as that described by way of example in the above ink jet printing color ink, an acetylene glycol-based surfactant, a silicone-based surfactant, or a fluorine-based surfactant may be preferably used. As concrete examples of those surfactants, a surfactant similar to that described by way of example in the above ink jet printing color ink may also be used. The content of the surfactant is 0.1 to 1.5 percent by mass with respect to the total mass of the penetrant. 3.4. Other components

The penetrant used in this embodiment may contain, if needed, a pH adjuster, an antiseptic agent/a fungicide, an antirust agent, a chelating agent, and/or the like. As the other components, components similar to those described by way of example in the above ink jet printing color ink may also be used.

In addition, an urea used as the humidifier is preferably added in order to improve the ejection stability. When the urea is added, the content thereof with respect to that total mass of the ink is preferably 1 to 20 percent by mass and more preferably 5 to 15 percent by mass. 3.5. Method for Preparing Penetrant

The ink jet printing penetrant according to this embodiment can be manufactured by dispersing and mixing the components described above using an appropriate method. After the components described above are sufficiently stirred, filtration is performed to remove coarse particles and foreign materials which cause clogging, so that a target penetrant can be obtained.

3.6. Physical Properties of Penetrant

3.6.1. pH

The ink jet printing penetrant according to this embodiment preferably has a pH of 7.0 to 11.0 and more preferably has a pH of 8.0 to 10.5. Since the pH of the penetrant is in the range described above, the penetration property of the ink, which is used together with the penetrant, can be controlled, and hence, the color difference between the front and the rear surfaces of the cloth can be suppressed. In addition, the decomposition of the dye in the ink can be suppressed, and the degradation in color development can be suppressed.

3.6.2. Surface Tension

When the ink jet printing penetrant according to this embodiment is ejected by an ink jet-type recording head, a surface tension of the penetrant at 20°C is preferably 20 to 40 mN/m and more preferably 30 to 36 mN/m. Since the surface tension of the penetrant is in the range described above, the ejection stability is excellent, and in addition, the penetrant uniformly wet spreads on the cloth when being adhered to the cloth and is likely to penetrate therein. The measurement of the surface tension may be performed in a manner similar to that described in the case of the ink.

### 3.6.3. Viscosity

A viscosity of the ink jet printing penetrant at 20°C according to this embodiment is preferably 1.5 to 10 mPa·s, more preferably 2 to 8 mPa·s, and further preferably 4 to 5.5 mPa·s. When the viscosity of the penetrant at 20°C is in the range described above, the penetrant is more likely to be fixed to the cloth when being adhered to the cloth. The measurement of the viscosity may be performed in a manner similar to that for the ink.

### 4. Ink Jet Printing Ink Set

The ink jet printing ink set according to this embodiment is formed from the ink jet printing color ink containing a dye described above and the ink jet printing penetrant according to this embodiment.

In this embodiment, since the hydrophilic penetrant is used as described above, the penetrant promotes the ink to penetrate in a cloth thickness direction, and hence, the color difference between the front and the rear surfaces can be reduced. In addition, when the color ink uses at least two types of dyes, or when the set includes at least two types of color inks, the solubility of the dye adhered to the cloth is controlled, and the change in color of an image, which is caused when a specific color ink is not dyed, can be suppressed. This effect is significant when a dispersive dye is used as the dye.

### 5. Cloth

The ink jet printing method according to this embodiment is performed on a cloth. A raw material forming the cloth is not particularly limited, and for example, there may be mentioned natural fibers of cotton, hemp, wool, silk, or the like; synthetic fibers of a polypropylene, a polyester, an acetate, a triacetate, a polyamide, a polyurethane, or the like; biodegradable fibers of a poly(lactic acid) or the like; or blend fibers of those materials mentioned above. In this embodiment, since the ink jet printing penetrant contains the glycol-based solvent having an HSP value of 13.6 or more and a standard boiling point of 243°C or less and water, and since the content of this glycol-based solvent is 95 percent by mass or more with respect to the total mass of the organic solvent contained in the penetrant, when the cloth is a polyester cloth or a blend cloth containing a polyester and an elastomer or the like, printing can be performed so that the color difference between the front and the rear surfaces is reduced. In addition, in particular, when the dye of the ink is a dispersive dye, the color difference between the front and the rear surfaces can be reduced. In addition, even when a mixed ink containing a plurality of dispersive dyes is used, or even when a set including at least two types of color inks is used, the change in color is not likely to occur.

The cloth may be any one of a woven fabric, a knitted fabric, a non-woven cloth, and the like formed from the fibers described above. In addition, the weight per unit area of the cloth used in this embodiment is not particularly limited and may be 1.0 to 10.0 ounces and is preferably 2.0 to 9.0 ounces, more preferably 3.0 to 8.0 ounces, and further preferably 4.0 to 7.0 ounces. When the weight per unit area of the cloth is in the range as described above, preferable recording can be performed. Furthermore, the ink jet printing method according to this embodiment may be applied to a plurality of cloths having different weights per unit area, and preferable printing can be performed. In addition, by the ink jet printing method according to this embodiment, preferable printing having a small color difference between the front and the rear surfaces can also be performed on a relatively thick substrate.

### 6. Ink Jet Printing Method

The ink jet printing method according to this embodiment performs printing by adhering the ink jet printing color ink containing a dye described above and the ink jet printing penetrant according to this embodiment and has a color ink adhesion step and a penetrant adhesion step. A timing at which the penetrant is adhered to the cloth may be before, simultaneously with, or after the adhesion of the color ink.

In the ink jet printing method according to this embodiment, since the ink jet printing color ink containing a dye described above and the ink jet printing penetrant according to this embodiment are used, the penetration of the ink in the cloth is appropriately controlled, and the color difference between the front and the rear surfaces can be reduced. In addition, the degradation in color development, which is caused when the ink is not fixed, can be suppressed. Furthermore, when the ink contains a dispersive dye as the dye, the decomposition of the dye can be suppressed. In particular, when a mixed ink containing at least two types of dyes is used as the ink, or when a set including at least two types of color inks is used, the solubility of the dye adhered to the cloth is controlled, and the change in color of an image, which is caused when a specific color ink is not dyed, can be suppressed. This effect is particularly significant when a dispersive dye is used as the dye.

6.1. Color Ink Adhesion Step

The color ink adhesion step is a step in which the color ink described above is ejected from the nozzle of the ink jet head 2 so as to be adhered to at least a part of one surface of the cloth M facing the nozzle surface of the ink jet head 2 shown in FIGURE. By the step described above, an image is formed on the cloth by the dye.

In the color ink adhesion step, the adhesion amount of the ink jet printing color ink to the cloth is, for example, preferably 10 g/m$^2$ or more, more preferably 20 g/m$^2$ or more, and further preferably 30 g/m$^2$ or more. In addition, the ink adhesion amount is preferably 100 g/m$^2$ or less, more preferably 80 g/m$^2$ or less, and further preferably 60 g/m$^2$ or less. Since the adhesion amount of the color ink is in the range described above, the chromogenic property of an image to be recorded is excellent, and images, such as pictures and/or letters, can be reproducibly recorded on the cloth.

6.2. Penetrant Adhesion Step

The penetrant adhesion step is a step in which the penetrant described above is ejected from the nozzle of the ink jet head 2 so as to be adhered to one surface of the cloth M facing the nozzle surface of the ink jet head 2 shown in FIGURE. The penetrant adhesion step may be performed before, simultaneously with, or after the color ink adhesion step.

When the penetrant is adhered to the cloth, the penetrant may be adhered so as to be overlapped with at least a part of a region to which the color ink is adhered. In particular, the penetrant is adhered so as to be preferably overlapped with 50% or more of the region to which the color ink is adhered, more preferably overlapped with 60% or more of the above region, further preferably overlapped with 70% or more of the above region, and particularly preferably overlapped with 80% or more of the above region. Since the penetrant is adhered as described above, the color ink is allowed to penetrate to the rear surface of the cloth, and hence, the color difference between the front and the rear surfaces thereof can be reduced.

In the penetrant adhesion step, the adhesion amount of the penetrant to the cloth is, for example, preferably 100 g/m$^2$ or less, more preferably 80 g/m$^2$ or less, and further preferably 60 g/m$^2$ or less. Since the adhesion amount of the penetrant is in the range described above, the ink is allowed to penetrate to the rear surface of the cloth, and hence, the intensity in color development at the rear surface of the cloth can be increased. In addition, excessive penetration of the ink is suppressed, and hence, the generation of blurring can be suppressed.

6.3. Fixing Step

The ink jet printing method according to this embodiment may include a fixing step of fixing the dye adhered to the cloth in the color ink adhesion step.

In particular, the fixing step is a heat treatment step in which at least one of heat and steam is applied to the cloth obtained in the color ink adhesion step, and by this step, the dye in the ink is fixed to the fibers of the cloth. A related known method may be used for the heat treatment method, and for example, the heating mechanism 6 shown in FIGURE may be mentioned. As the heating mechanism, besides the mechanism described above, for example, there may be mentioned a heat press method, a normal pressure steam method, a high pressure steam method, a hot wind dry method, or a thermofix method.

In order to preferably dye the fibers forming the cloth with the dye, the temperature in the fixing step, that is, an achieving temperature of the cloth, is preferably set in a range from 90°C to 110°C in the case of natural fibers of cotton or the like and synthetic fibers of a polyamide or the like and is preferably set in a range of 160°C to 170°C in the case of synthetic fibers of a polyester or the like.

6.4. Washing Step

The ink jet printing method according to this embodiment may include a washing step of washing a printed material. The washing step is performed after the fixing step described above so as to remove a dye not fixed to the fibers. The washing step may be performed, for example, using water or hot water and, if needed, may be performed a plurality of times, and a soaping treatment may also be performed.

6.5. Other Steps

The ink jet printing method according to this embodiment may include, if needed, a pre-treatment step in which a pre-treatment composition containing at least one of an alkaline agent and a hydrotropic agent is applied to the cloth. As a method to apply the pre-treatment composition to the cloth, a method similar to the method described above in which the penetrant is adhered may be mentioned, and any method may also be used.

In addition, the ink jet printing method according to this embodiment may include a pre-treatment composition drying step of drying the pre-treatment composition applied to the cloth after the pre-treatment step described above and before the adhesion step described above. Although the drying of the pre-treatment composition may be performed by spontaneous drying, in order to increase a drying rate, drying with heating is preferable. When heating is performed in the pre-treatment composition drying step, the heating step is not particularly limited, and for example, a method similar to that of the fixing step described above may be mentioned.

7. Examples

Hereinafter, although the present disclosure will be described in detail with reference to Examples and Comparative Examples, the present disclosure is not limited to the following Examples. In addition, "part(s)" and "%" in Examples and Comparative Examples each indicate a mass basis unless otherwise particularly noted.

7.1. Preparation of Color Ink and Penetrant

Components listed in Tables 1 to 4 were mixed together and then mixed and stirred for 2 hours by a magnetic stirrer. Subsequently, filtration was performed using a membrane filter having a pore size of 5 μm, so that inks 1 to 5 and penetrants were obtained. In addition, in Tables 1 to 4, the unit of the numerical value indicates percent by mass unless otherwise particularly noted. In addition, ion-exchanged water was added so that the total mass of the ink or the penetrant was 100 percent by mass.

Table 1

| | | TYPE OF INK | INK 1 | INK 2 | INK 3 | INK 4 | INK 5 |
|---|---|---|---|---|---|---|---|
| | | TYPE OF DYE | DISPERSIVE TYPE | DISPERSIVE TYPE | DISPERSIVE TYPE | REACTIVE TYPE | ACIDIC TYPE |
| | | COLOR | Black | Yellow | Cyan | Black | Black |
| DYE | | DISPERSE YELLOW 163 | 3 | | | | |
| | | DISPERSE YELLOW 114 | | 4.5 | | | |
| | | DISPERSE RED 154 | 2 | | | | |
| | | DISPERSE BLUE 60 | | | 4.5 | | |
| | | DISPERSE BLUE 165 | 2 | | | | |
| | | REACTIVE BLACK 39 | | | | 12 | |
| | | REACTIVE ORANGE 12 | | | | 2 | |
| | | REACTIVE RED 245 | | | | 1 | |
| | | ACID BLACK 172 | | | | | 10 |
| ORGANIC SOLVENT | GLYCOL-BASE | GLYCERIN | 2 | 2 | 2 | | 3 |
| | | 1,2-PROPANEDIOL | 19 | 19 | 19 | 3 | |
| | | 1,3-BUTANEDIOL | 19 | 19 | 19 | | |
| | | 1,2-HEXANEDIOL | | | | 2 | |
| | LACTAM-BASE | 2-PYRROLIDONE | | | | 5 | 15 |
| SOLID COMPONENT | | UREA | | | | 3 | |
| SURFACTANT | | OLFINE PD002W | 0.1 | 0.2 | 0.2 | 0.1 | 0.5 |
| OTHER ADDITIVES | | TRIETHANOLAMINE | 0.2 | 0.2 | 0.2 | 0.2 | 0.5 |
| | | EDTA | 0.02 | 0.02 | 0.02 | 0.02 | 0.02 |
| | | PROXEL XL-2 | 0.3 | 0.2 | 0.2 | 0.3 | 0.3 |
| WATER | | ION-EXCHANGED WATER | BALANCE | BALANCE | BALANCE | BALANCE | BALANCE |

EP 3 617 284 B1

Table 2

| | | | HSP VALUE | BOILING POINT (°C) | DENSITY (g/cm³) | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 | EXAMPLE 10 | EXAMPLE 11 | EXAMPLE 12 |
|---|---|---|---|---|---|---|---|---|---|---|---|---|---|---|---|---|---|
| INK | | | | | | INK 1 | INK 1 | INK 1 | INK 1 | INK 1 | INK 1 | INK 1 | INK 1 | INK 1 | INK 1 | INK 1 | INK 1 |
| ORGANIC SOLVENT | GLYCOL-BASE | 1,2,3,4-BUTANETETROL | 17.8 | 329°C | 1.451 | | | | | | | | | | | | |
| | | GLYCERIN | 16.7 | 290°C | 1.261 | | | | | | | | | | | | |
| | | ETHYLENE GLYCOL | 16.1 | 197°C | 1.113 | | | | | | | | | | 38 | | |
| | | 1,3-PROPANEDIOL | 15.5 | 214°C | 1.060 | | | | | | | | | | | 38 | |
| | | 1,3-BUTANEDIOL | 13.6 | 207°C | 1.005 | 23 | 23 | 15 | 15 | 19 | 19 | 20 | | 20 | | | |
| | | 1,2-PROPANEDIOL | 14.2 | 188°C | 1.038 | 12.5 | 10.3 | 20 | 20 | 19 | 19 | 20 | 40 | 18 | | | 18 |
| | | 1,4-BUTANEDIOL | 14.1 | 228°C | 1.022 | | | | | | | | | | | | 20 |
| | | DIETHYLENE GLYCOL | 13.7 | 245°C | 1.116 | | | | | | | | | | | | |
| | | TRIETHYLENE GLYCOL | 13.5 | 285°C | 1.125 | | | | | | | | | | | | |
| | | 1,5-PENTANEDIOL | 13.5 | 239°C | 0.985 | | | | | | | | | | | | |
| | | TRIETHYLENE GLYCOL MONOMETHYL ETHER | 10.7 | 248°C | 1.040 | | | | | | | | | | | | |
| | | TRIETHYLENE GLYCOL MONOBUTYL ETHER | 10 | 278°C | 1.002 | | | | | | | | | | | | |
| | LACTAM-BASE | 2-PYRROLIDONE | 11.5 | 245°C | 1.116 | | | | | | | | | 2 | 2 | 2 | 2 |

(continued)

| | | | HSP VA-LUE | BOIL-ING POINT (°C) | DENSI-TY (g/cm$^3$) | EXAM-PLE 1 | EXAM-PLE 2 | EXAM-PLE 3 | EXAM-PLE 4 | EXAM-PLE 5 | EXAM-PLE 6 | EXAM-PLE 7 | EXAM-PLE 8 | EXAM-PLE 9 | EXAM-PLE 10 | EXAM-PLE 11 | EXAM-PLE 12 |
|---|---|---|---|---|---|---|---|---|---|---|---|---|---|---|---|---|---|
| SURFACTANT | | OLFINE EXP4300 | | | | 0.25 | 0.25 | 0.25 | 0.25 | 0.25 | 0.25 | 0.25 | 0.25 | 0.25 | 0.25 | 0.25 | 0.25 |
| OTHER ADDITIVES | | UREA | | | | 15 | 15 | 10 | 15 | 5 | | 5 | | | | | |
| | | TRIETHANOLAMINE | | | | 0.2 | 0.2 | 0.2 | 0.2 | 0.2 | 0.2 | 0.2 | 0.2 | 0.2 | 0.2 | 0.2 | 0.2 |
| | | PROXEL XL-2 | | | | 0.3 | 0.3 | 0.3 | 0.3 | 0.3 | 0.3 | 0.3 | 0.3 | 0.3 | 0.3 | 0.3 | 0.3 |
| WATER | | ION-EXCHANGED WATER | | | | BAL-ANCE | BAL-ANCE | BAL-ANCE | BAL-ANCE | BAL-ANCE | BAL-ANCE | BAL-ANCE | BAL-ANCE | BAL-ANCE | BAL-ANCE | BAL-ANCE | BAL-ANCE |
| TOTAL (PERCENT BY MASS) | | | | | | 100 | 100 | 100 | 100 | 100 | 100 | 100 | 100 | 100 | 100 | 100 | 100 |
| SOLVENT HAVING HSP VALUE OF 13.6 OR MORE/ALL SOLVENTS | | | | | | 100% | 100% | 100% | 100% | 100% | 100% | 100% | 100% | 95% | 95% | 95% | 95% |
| SOLVENT HAVING HSP VALUE OF 13.6 OR MORE AND BOILING POINT OF 243°C OR LESS/ALL SOLVENTS | | | | | | 100% | 100% | 100% | 100% | 100% | 100% | 100% | 100% | 95% | 95% | 95% | 95% |
| ALL SOLVENTS/PENETRANT | | | | | | 36% | 33% | 35% | 35% | 38% | 38% | 40% | 40% | 40% | 40% | 40% | 40% |
| EVALUA-TION RE-SULT | POLYE-STER | COLOR DIFFERENCE BETWEEN FRONT AND REAR SURFACES | | | | A | A | A | A | A | S | A | A | B | A | A | A |
| | | DIFFERENCE IN OD VALUE BETWEEN FRONT AND REAR SURFACES | | | | A | A | A | A | A | A | A | A | A | A | B | A |
| | BLEND OF POLYE-STER/ ELASTO-MER | COLOR DIFFERENCE BETWEEN FRONT AND REAR SURFACES | | | | A | A | A | A | A | S | A | A | B | A | B | B |
| | | DIFFERENCE IN OD VALUE BETWEEN FRONT AND REAR SURFACES | | | | B | B | B | B | A | A | A | B | A | B | B | A |
| | EJECTION STABILITY | CONTINUOUS PRINTING | | | | A | A | A | A | S | A | S | B | A | C | C | C |

(continued)

| | | | HSP VA-LUE | BOIL-ING POINT (°C) | **DENSI-TY** (g/cm$^3$) | EXAM-PLE 1 | EXAM-PLE 2 | EXAM-PLE 3 | EXAM-PLE 4 | EXAM-PLE 5 | EXAM-PLE 6 | EXAM-PLE 7 | EXAM-PLE 8 | EXAM-PLE 9 | EXAM-PLE 10 | EXAM-PLE 11 | EXAM-PLE 12 |
|---|---|---|---|---|---|---|---|---|---|---|---|---|---|---|---|---|---|
| EVALUA-TION RE-SULT | COTTON | COLOR DIFFERENCE BETWEEN FRONT AND REAR SURFACES | | | | | | | | | | | | | | | |
| | | DIFFERENCE IN OD VALUE BETWEEN FRONT AND REAR SURFACES | | | | | | | | | | | | | | | |
| | BLEND OF POLYA-MIDE/ ELASTO-MER | COLOR DIFFERENCE BETWEEN FRONT AND REAR SURFACES | | | | | | | | | | | | | | | |
| | | DIFFERENCE IN OD VALUE BETWEEN FRONT AND REAR SURFACES | | | | | | | | | | | | | | | |
| | EJECTION STABILITY | CONTINUOUS PRINTING | | | | | | | | | | | | | | | |

Table 3

| | | | HSP VA-LUE | BOIL-ING POINT (°C) | DENSI-TY (g/cm$^3$) | EXAM-PLE 13 | EXAM-PLE 14 | EXAM-PLE 15 | EXAM-PLE 16 | EXAM-PLE 17 | EXAM-PLE 18 | EXAM-PLE 19 | EXAM-PLE 20 | EXAM-PLE 21 | EXAM-PLE 22 | EXAM-PLE 23 | EXAM-PLE 24 | EXAM-PLE 25 |
|---|---|---|---|---|---|---|---|---|---|---|---|---|---|---|---|---|---|---|
| | INK | | | | | INK 1 | INK 1 | INK 1 | INK 1 | INK 1 | INK 1 | INK 1 | INK 1 | INK 1 | INK 2 | INK 3 | INK 4 | INK 5 |
| ORGANIC SOLVENT | GLYCOL-BASE | 1,2,3,4-BUTANETETROL | 17.8 | 329°C | 1.451 | | | | | | | | | | | | | |
| | | GLYCERIN | 16.7 | 290°C | 1.261 | | | | | | | | | 2 | | | | |
| | | ETHYLENE GLYCOL | 16.1 | 197°C | 1.113 | | | | | | | | | | | | | |
| | | 1,3-PROPANEDIOL | 15.5 | 214°C | 1.060 | 20 | 20 | 20 | | | | | | | | | | |
| | | 1,3-BUTANEDIOL | 13.6 | 207°C | 1.005 | | | | 25 | 13 | 26 | 12 | 20 | 20 | 19 | 19 | 19 | 19 |
| | | 1,2-PROPANE-DIOL | 14.2 | 188°C | 1.038 | 18 | 19 | 20 | 25 | 12 | 25 | 12 | 18 | 18 | 19 | 19 | 19 | 19 |
| | | 1,4-BUTANEDIOL | 14.1 | 228°C | 1.022 | | | | | | | | | | | | | |
| | | DIETHYLENE GLYCOL | 13.7 | 245°C | 1.116 | | | | | | | | 2 | | | | | |
| | | TRIETHYLENE GLYCOL | 13.5 | 285°C | 1.125 | | | | | | | | | | | | | |
| | | 1,5-PENTANEDIOL | 13.5 | 239°C | 0.985 | | | | | | | | | | | | | |
| | | TRIETHYLENE GLYCOL MONOMETHYL ETHER | 10.7 | 248°C | 1.040 | | | | | | | | | | | | | |
| | | TRIETHYLENE GLYCOL MONOBUTYL ETHER | 10 | 278°C | 1.002 | | | | | | | | | | | | | |
| | LACTAM-BASE | 2-PYRROLIDONE | 11.5 | 245°C | 1.116 | 2 | 1 | 0 | | | | | | | | | | |

(continued)

| | | HSP VA-LUE | BOIL-ING POINT (°C) | DENSI-TY (g/cm$^3$) | EXAM-PLE 13 | EXAM-PLE 14 | EXAM-PLE 15 | EXAM-PLE 16 | EXAM-PLE 17 | EXAM-PLE 18 | EXAM-PLE 19 | EXAM-PLE 20 | EXAM-PLE 21 | EXAM-PLE 22 | EXAM-PLE 23 | EXAM-PLE 24 | EXAM-PLE 25 |
|---|---|---|---|---|---|---|---|---|---|---|---|---|---|---|---|---|---|
| SURFACTANT | OLFINE EXP4300 | | | | 0.25 | 0.25 | 0.25 | 0.25 | 0.25 | 0.25 | 0.25 | 0.25 | 0.25 | 0.25 | 0.25 | 0.25 | 0.25 |
| OTHER ADDITIVES | UREA | | | | | | | | | | | | | | | | |
| | TRIETHANOLAMINE | | | | 0.2 | 0.2 | 0.2 | 0.2 | 0.2 | 0.2 | 0.2 | 0.2 | 0.2 | 0.2 | 0.2 | 0.2 | 0.2 |
| | PROXEL XL-2 | | | | 0.3 | 0.3 | 0.3 | 0.3 | 0.3 | 0.3 | 0.3 | 0.3 | 0.3 | 0.3 | 0.3 | 0.3 | 0.3 |
| WATER | ION-EXCHANGED WATER | | | | BAL-ANCE | BAL-ANCE | BAL-ANCE | BAL-ANCE | BAL-ANCE | BAL-ANCE | BAL-ANCE | BAL-ANCE | BAL-ANCE | BAL-ANCE | BAL-ANCE | BAL-ANCE | BAL-ANCE |
| TOTAL (PERCENT BY MASS) | | | | | 100 | 100 | 100 | 100 | 100 | 100 | 100 | 100 | 100 | 100 | 100 | 100 | 100 |
| SOLVENT HAVING HSP VALUE OF 13.6 OR MORE/ALL SOLVENTS | | | | | 95% | 98% | 100% | 100% | 100% | 100% | 100% | 95% | 100% | 100% | 100% | 100% | 100% |
| SOLVENT HAVING HSP VALUE OF 13.6 OR MORE AND BOILING POINT OF 243°C OR LESS/ALL SOLVENTS | | | | | 95% | 98% | 100% | 100% | 100% | 100% | 100% | 95% | 95% | 100% | 100% | 100% | 100% |
| ALL SOLVENTS/PENETRANT | | | | | 40% | 40% | 40% | 50% | 25% | 51% | 24% | 40% | 40% | 38% | 38% | 38% | 38% |
| EVALUA-TION RE-SULT | POLYE-STER | COLOR DIFFERENCE BETWEEN FRONT AND REAR SURFACES | | | A | A | A | A | A | A | A | B | B | S | S | | |
| | | DIFFERENCE IN OD VALUE BETWEEN FRONT AND REAR SURFACES | | | A | A | A | A | A | B | B | A | A | A | A | | |
| | BLEND OF POLYE-STER/ ELASTO-MER | COLOR DIFFERENCE BETWEEN FRONT AND REAR SURFACES | | | B | B | A | A | A | A | A | B | B | S | S | | |
| | | DIFFERENCE IN OD VALUE BETWEEN FRONT AND REAR SURFACES | | | A | A | A | B | B | B | B | A | A | A | A | | |
| | EJECTION STABILITY | CONTINUOUS PRINTING | | | C | B | A | B | B | C | C | A | A | A | A | | |

EP 3 617 284 B1

(continued)

| | | | HSP VA-LUE | BOIL-ING POINT (°C) | DENSI-TY (g/cm³) | EXAM-PLE 13 | EXAM-PLE 14 | EXAM-PLE 15 | EXAM-PLE 16 | EXAM-PLE 17 | EXAM-PLE 18 | EXAM-PLE 19 | EXAM-PLE 20 | EXAM-PLE 21 | EXAM-PLE 22 | EXAM-PLE 23 | EXAM-PLE 24 | EXAM-PLE 25 |
|---|---|---|---|---|---|---|---|---|---|---|---|---|---|---|---|---|---|---|
| EVALUA-TION RE-SULT | COTTON | COLOR DIFFERENCE BETWEEN FRONT AND REAR SURFACES | | | | | | | | | | | | | | | A | |
| | | DIFFERENCE IN OD VALUE BETWEEN FRONT AND REAR SURFACES | | | | | | | | | | | | | | | B | |
| | BLEND OF POLYA-MIDE/ELASTO-MER | COLOR DIFFERENCE BETWEEN FRONT AND REAR SURFACES | | | | | | | | | | | | | | | | A |
| | | DIFFERENCE IN OD VALUE BETWEEN FRONT AND REAR SURFACES | | | | | | | | | | | | | | | | B |
| | EJECTION STABILITY | CONTINUOUS PRINTING | | | | | | | | | | | | | | | A | A |

Table 4

| | | | HSP VALUE | BOILING POINT (°C) | DENSITY (g/cm³) | COMPARATIVE EXAMPLE 1 | COMPARATIVE EXAMPLE 2 | COMPARATIVE EXAMPLE 3 | COMPARATIVE EXAMPLE 4 | COMPARATIVE EXAMPLE 5 | COMPARATIVE EXAMPLE 6 | COMPARATIVE EXAMPLE 7 | COMPARATIVE EXAMPLE 8 | COMPARATIVE EXAMPLE 9 | COMPARATIVE EXAMPLE 10 | COMPARATIVE EXAMPLE 11 | COMPARATIVE EXAMPLE 12 | COMPARATIVE EXAMPLE 13 | COMPARATIVE EXAMPLE 14 | COMPARATIVE EXAMPLE 15 |
|---|---|---|---|---|---|---|---|---|---|---|---|---|---|---|---|---|---|---|---|---|
| INK | | | | | | INK 1 | INK 1 | INK 1 | INK 1 | INK 1 | INK 1 | INK 1 | INK 1 | INK 1 | INK 1 | INK 1 | INK 1 | INK 1 | INK 2 | INK 3 |
| ORGANIC SOLVENT | GLYCOL-BASE | 1,2,3,4-BUTANETETROL | 17.8 | 329°C | 1.451 | | | | | 40 | | | | | | | | | | |
| | | GLYCERIN | 16.7 | 290°C | 1.261 | | | | 5 | | 15 | 40 | | | | | | | | |
| | | ETHYLENE GLYCOL | 16.1 | 197°C | 1.113 | | | | | | | | | | | | | | | |
| | | 1,3-PROPANEDIOL | 15.5 | 214°C | 1.060 | | | | | | | | | | | | | | | |
| | | 1,3-BUTANEDIOL | 13.6 | 207°C | 1.005 | | 20 | 20 | 20 | | | | | | | | | | | |
| | | 1,2-PROPANEDIOL | 14.2 | 188°C | 1.038 | | 10 | 10 | 10 | | | | | | 15 | 10 | 18 | 18 | | |
| | | 1,4-BUTANEDIOL | 14.1 | 228°C | 1.022 | 20 | | | | | | | | | | | | | 20 | 20 |
| | | DIETHYLENE GLYCOL | 13.7 | 245°C | 1.116 | 20 | 5 | | | | | | 40 | 20 | 20 | 20 | 20 | | 20 | 20 |
| | | TRIETHYLENE GLYCOL | 13.5 | 285°C | 1.125 | | | | | | | 20 | | | | | | | | |
| | | 1,5-PENTANEDIOL | 13.5 | 239°C | 0.985 | | | | | | | | | | | | | 20 | | |
| | | TRIETHYLENE GLYCOL MONOMETHYL ETHER | 10.7 | 248°C | 1.040 | | | | | | | | | 20 | 5 | 10 | | | | |
| | | TRIETHYLENE GLYCOL MONOBUTYL ETHER | 10 | 278°C | 1.002 | | | | | | 1 | | | | | | 2 | | | |
| | LACTAM-BASE | 2-PYRROLIDONE | 11.5 | 245°C | 1.116 | | | 5 | | | | | | | | | | | 2 | |
| SURFACTANT | | OLFINE EXP4300 | | | | 0.25 | 0.25 | 0.25 | 0.25 | 0.25 | 0.25 | 0.25 | 0.25 | 0.25 | 0.25 | 0.25 | 0.25 | 0.25 | 0.25 | 0.25 |
| OTHER ADDITIVES | | UREA | | | | | | | | | | | | | | | | | | |
| | | TRIETHANOLAMINE | | | | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | | PROXEL XL-2 | | | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| WATER | | ION-EXCHANGED WATER | | | | BALANCE | BALANCE | BALANCE | BALANCE | BALANCE | BALANCE | BALANCE | BALANCE | BALANCE | BALANCE | BALANCE | BALANCE | BALANCE | BALANCE | BALANCE |
| TOTAL (PERCENT BY MASS) | | | | | | 100 | 100 | 100 | 100 | 100 | 100 | 100 | 100 | 100 | 100 | 100 | 100 | 100 | 100 | 100 |
| SOLVENT HAVING HSP VALUE OF 13.6 OR MORE/ALL SOLVENTS | | | | | | 50% | 86% | 86% | 100% | 100% | 42% | 100% | 0% | 0% | 38% | 25% | 45% | 45% | 50% | 50% |
| SOLVENT HAVING HSP VALUE OF 13.6 OR MORE AND BOILING POINT OF 243°C OR LESS/ALL SOLVENTS | | | | | | 50% | 86% | 86% | 86% | 0% | 0% | 0% | 0% | 0% | 38% | 25% | 45% | 45% | 50% | 50% |
| ALL SOLVENTS/PENETRANT | | | | | | 40% | 35% | 35% | 35% | 40% | 36% | 40% | 40% | 40% | 40% | 40% | 40% | 40% | 40% | 40% |
| EVALUATION RESULT | POLYESTER | COLOR DIFFERENCE BETWEEN FRONT AND REAR SURFACES | | | | C | C | C | C | C | D | D | C | D | C | D | C | B | B | B |
| | | DIFFERENCE IN OD VALUE BETWEEN FRONT AND REAR SURFACES | | | | B | B | B | B | B | D | D | C | D | B | C | B | B | C | C |
| | BLEND OF POLYESTER/ELASTOMER | COLOR DIFFERENCE BETWEEN FRONT AND REAR SURFACES | | | | C | C | C | C | C | D | D | C | D | C | D | C | B | B | B |
| | | DIFFERENCE IN OD VALUE BETWEEN FRONT AND REAR SURFACES | | | | B | B | B | B | B | D | D | C | D | B | C | B | B | C | C |
| | EJECTION STABILITY | CONTINUOUS PRINTING | | | | D | A | A | A | C | D | D | C | D | C | C | C | C | D | D |
| EVALUATION RESULT | COTTON | COLOR DIFFERENCE BETWEEN FRONT AND REAR SURFACES | | | | | | | | | | | | | | | | | | |
| | | DIFFERENCE IN OD VALUE BETWEEN FRONT AND REAR SURFACES | | | | | | | | | | | | | | | | | | |
| | BLEND OF POLYAMIDE/ELASTOMER | COLOR DIFFERENCE BETWEEN FRONT AND REAR SURFACES | | | | | | | | | | | | | | | | | | |
| | | DIFFERENCE IN OD VALUE BETWEEN FRONT AND REAR SURFACES | | | | | | | | | | | | | | | | | | |
| | EJECTION STABILITY | CONTINUOUS PRINTING | | | | | | | | | | | | | | | | | | |

Among the components listed in the tables, the details of the components not described by the chemical names are as follows.

Dye

- C.I. Disperse Yellow 163, dispersive dye
- C.I. Dispersive Yellow 114, dispersive dye
- C.I. Dispersive Red 154, dispersive dye
- C.I. Dispersive Blue 60, dispersive dye
- C.I. Dispersive Blue 165, dispersive dye
- C.I. Reactive Black 39, reactive dye
- C.I. Reactive Orange 12, reactive dye
- C.I. Reactive Red 245, reactive dye
- C.I. Acid Black 172, acidic dye

Surfactant

- Olefin (registered trademark) PD002W: acetylene glycol-based surfactant, manufactured by Nisshin Chemical Industry Co., Ltd.
- Olefin (registered trademark) EXP. 4300: acetylene glycol-based surfactant, manufactured by Nisshin Chemical Industry Co., Ltd.

Other Additives

- EDTA: disodium ethylenediaminetetraacetate, chelating agent
- PROXEL XL-2: trade name, antiseptic agent, manufactured by Lonza Japan Ltd.

The HSP values in the tables are numerical values each obtained by calculation of the above equation (1) with reference to the numerical values of $\delta_D$, $\delta_P$, and $\delta_H$ listed in the data base of International Chemical Identifier.

7.2. Evaluation Test

7.2.1. Evaluation of Color Difference between Front and Rear Surfaces

The inks thus obtained and the penetrants listed in Tables 2 to 4 were each filled in a cartridge of an ink jet printer (product name "PX-G930", manufactured by Seiko Epson Corporation). A cloth was set in the printer, and the ink and the penetrant were each printed at a duty of 100%, so that the ink and the penetrant were adhered to a surface of the cloth. The image resolution was set to 1,440×720 dpi. As the cloth, in accordance with the types of dyes, four types of cloths, that is, a cloth containing 100% of a polyester (basis weight: 70 g/m$^2$), a blend cloth containing a polyester and an elastomer (basis weight: 190 g/m$^2$), a cloth containing 100% of a cotton (basis weight: 130 g/m$^2$, and a blend cloth containing a polyamide and an elastomer (basis weight: 190 g/m$^2$), were used.

In addition, the "duty" in the above measurement method indicates the value calculated in accordance with the following equation.

Duty (%) = (number of actually ejected dots/(vertical resolution × lateral resolution)) × 100

In the above equation, the "number of actually ejected dots" indicates the number of actually ejected dots per unit area, and the "vertical resolution" and the "lateral resolution" each indicate the resolution per unit area.

On a printed material thus obtained, by the use of a steamer (Steamer DHe type, manufactured by Mathis), a heat treatment was performed on a cotton at 102°C for 10 minuets, a polyamide at 102°C for 30 minuets, and a polyester or a blend containing a polyester and an elastomer at 170°C for 10 minuets, so that the ink was fixed to the cloth. Subsequently, washing and drying of the cloth were performed, and L*, a*, and b* values of the front surface and the rear surface of the printed material were measured and then evaluated in accordance with the following criteria. For the measurement, a colorimeter (trade name: "FD-7", manufactured by Konica Minolta, Inc.) was used.

Color difference $\Delta E^*$ between the front and the rear surfaces of the printed material was calculated using the following color difference formula, and the color difference was evaluated.

$$\Delta E^* = \{(\Delta L^*)^2+(\Delta a^*)^2+(\Delta b^*)^2\}^{0.5} \quad (2)$$

$$\Delta L^* = L^*_1 - L^*_2 \quad (3)$$

$$\Delta a^* = a^*_1 - a^*_2 \quad (4)$$

$$\Delta b^* = b^*_1 - b^*_2 \quad (5)$$

$L^*_1$, $a^*_1$, and $b^*_1$ each indicate the value at the front surface of the printed material, and $L^*_2$, $a^*_2$, and $b^*_2$ each indicate the value at the rear surface of the printed material.

Evaluation Criteria

S: Color difference between the front and the rear surfaces is less than 1.
A: Color difference between the front and the rear surfaces is 1 to less than 2.
B: Color difference between the front and the rear surfaces is 2 to less than 3.
C: Color difference between the front and the rear surfaces is 3 to less than 4.
D: Color difference between the front and the rear surfaces is more than 4.

7.2.2. Evaluation of Difference in OD Value between Front and Rear Surfaces

OD values of the front surface and the rear surface of the printed material obtained in 7.2.1 were measured using a colorimeter (trade name "FD-7", manufactured by Konica Minolta, Inc.), and the difference therebetween was obtained and then evaluated in accordance with the following criteria.

Evaluation Criteria

A: Difference in OD value between the front and the rear surfaces is less than 0.1.
B: Difference in OD value between the front and the surfaces is 0.1 to less than 0.2.
C: Difference in OD value between the front and the surfaces is 0.2 to less than 0.3.
D: Difference in OD value between the front and the surfaces is more than 0.3.

7.2.3. Evaluation of Continuous Printing

The inks thus obtained and the penetrants listed in Tables 2 to 4 were filled in cartridges of an ink jet printer (trade name "PX-G930", manufactured by Seiko Epson Corporation). After regular paper was set in the printer, a solid pattern having an A4 size was recorded on the regular paper using the ink and the penetrant. After recording was performed on 500 pieces of paper, the presence or absence of the generation of nozzle missing was confirmed by visual inspection using a nozzle check pattern, and evaluation was performed in accordance with the following criteria.

Evaluation Criteria

S: Number of missing nozzles is 0.
A: Number of missing nozzles is 1 to less than 5.
B: Number of missing nozzles is 5 to less than 10.
C: Number of missing nozzles is 10 to less than 15.
D: Number of missing nozzles is more than 15.

7.3. Evaluation Result

By the penetrant of Comparative Example 1 shown in Table 4, since the content of the glycol-based solvent having an HSP value of 13.6 or more and a standard boiling point of 243°C or less is low, the ink was not allowed to sufficiently penetrate to the rear surface, and as a result, the color difference and the difference in OD value between the front and the rear surfaces were increased. In addition, the evaluation of the continuous printing was also low. In Comparative Examples 2 to 4, although the content of the glycol-based solvent as described above was relatively high as compared to that of Comparative Example 1, and the evaluation of the continuous printing was improved, the color difference and the difference in OD value between the front and the rear surfaces were not so much changed.
Since the penetrants of Comparative Examples 5 to 9 contained no glycol-based solvent having an HSP value of 13.6 or more and a standard boiling point of 243°C or less, as was the case of Comparative Example 1, the ink was not allowed to sufficiently penetrate to the rear surface, and the color difference and the difference in OD value between the front and the rear surfaces were increased. In addition, the evaluation of the continuous printing was also low.
In the penetrants of Comparative Examples 10 to 13, since the content of the glycol-based solvent having an HSP value of 13.6 or more and a standard boiling point of 243°C or less was also low, as was the case of Comparative Example 1, the ink was not allowed to sufficiently penetrate to the rear surface, and the color difference and the difference in OD value between the front and the rear surfaces were increased. In addition, the evaluation of the continuous printing was also low. In addition, from Comparative Examples 1, 14, and 15, even when the type of dispersive dye was changed, the evaluation was not changed.
Compared to the results of Comparative Examples, the evaluation of the color difference and the difference in OD value between the front and the rear surfaces were each "B or more" in Examples. In addition, the evaluation of the continuous printing was "C or more".
First, in Examples 1 to 8, when the content of the glycol-based solvent having an HSP value of 13.6 or more and a standard boiling point of 243°C or less was 95 percent by mass or more with respect to the total mass of the organic solvent contained in the penetrant, the ink was allowed to sufficiently penetrate to the rear surface, and the color different and the difference in OD value between the front and the rear surfaces were small. In addition, the evaluation of the continuous printing was also high. In particular, when the content of the organic solvent with respect to the total mass of the penetrant was high, and at least two types of the glycol-based solvents were used, the evaluation tended to be high. In addition, when the urea functioning as a humidifier was contained, the evaluation of the continuous printing was improved. Furthermore, in Examples 7 and 8, when at least two types of the glycol-based solvents having an HSP value of 13.6 or more and a standard boiling point of 243°C or less were used, the evaluation of the continuous printing tended to be high.

EP 3 617 284 B1

From Examples 9 to 15, when 2-pyrrolidone, which was a compound having a lactam structure, was contained, the evaluation of the continuous printing tended to be low, and in the blend cloth containing a polyester and an elastomer, the evaluation of the color difference between the front and the rear surfaces tended to be relatively low. In addition, when at least two types of the glycol-based solvents having an HSP value of 13.6 or more and a standard boiling point of 243°C or less were used, the whole evaluation tended to be high.

From Examples 16 to 19, when the content of the organic solvent with respect to the total mass of the penetrant was 25 to 50 percent by mass, the evaluation of the continuous printing and the difference in OD value between the front and the rear surfaces tended to be high.

From comparison between Examples 9, 20, and 21 and Example 6, when a solvent other than the glycol-based solvent having an HSP value of 13.6 or more and a standard boiling point of 243°C or less was contained, the evaluation of the color difference between the front and the rear surfaces tended to be relatively low.

From comparison between Examples 22 and 23 and Example 6, even when different dispersive dyes were used, evaluation results similar to each other were obtained. On the other hand, from comparison between Example 24 and Example 6, when recording was performed on a cotton using the ink 4 containing a reactive dye, all the evaluation results of Example 24 were high although being slightly inferior to those of Example 6. In addition, from comparison between Example 25 and Example 6, when recording was performed on a blend cloth containing a polyamide and an elastomer using the ink 5 containing an acidic dye, all the evaluation results of Example 25 were high although being slightly inferior to those of Example 6.

Accordingly, when the penetrant in which the content of the glycol-based solvent having an HSP value of 13.6 or more and a standard boiling point of 243°C or less was 95 percent by mass or more with respect to the total mass of the organic solvent was used, the difference in OD value between the front and the rear surfaces could be reduced, and in addition, the color difference between the front and the rear surfaces was suppressed, and the ejection stability was excellent.

The present disclosure is not limited to the embodiments described above and may be variously changed. For example, the present disclosure includes substantially the same structure (for example, the structure in which the function, the method, and the result are the same as those described above, or the structure in which the object and the effect are the same as those described above) as the structure described in the embodiment. In addition, the present disclosure includes the structure in which a nonessential portion of the structure described in the embodiment is replaced with something else. In addition, the present disclosure includes the structure which performs the same operational effect as that of the structure described in the embodiment or the structure which is able to achieve the same object as that of the structure described in the embodiment. In addition, the present disclosure includes the structure in which a known technique is added to the structure described in the embodiment.

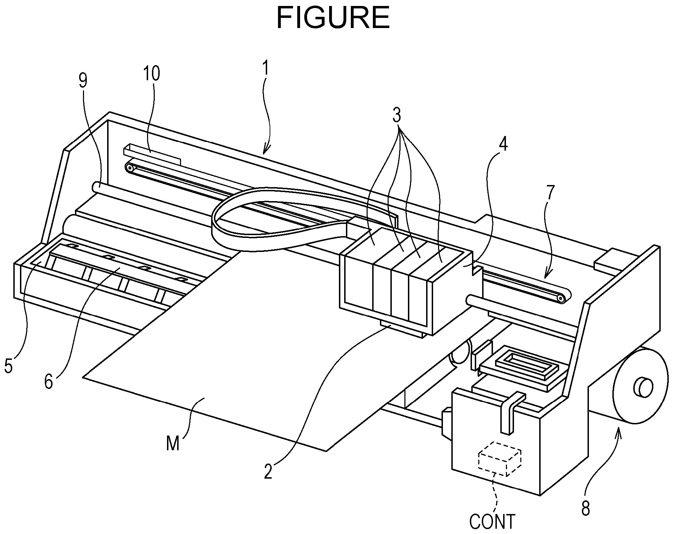

## Claims

1. An ink jet printing penetrant which is used to penetrate an ink jet printing color ink containing a dye in a cloth, the ink jet printing penetrant comprising:

   at least one glycol-based solvent having an HSP value of 13.6 or more;
   and
   water;
   wherein
   a content of the glycol-based solvent with respect to a total mass of at least one organic solvent contained in the ink jet printing penetrant is 95 percent by mass or more, and the total content of the glycol-based solvent and the other organic solvent with respect to a total mass of the ink jet printing penetrant is 25 percent by mass or more;
   the glycol-based solvent has a standard boiling point of 243°C or less;
   the number of the glycol-based solvents is at least two; and
   the penetrant further comprises a surfactant, and the content of the surfactant is 0.1 to 1.5 percent by mass with respect to the total mass of the penetrant.

2. The ink jet printing penetrant according to claim 1, wherein
   the dye is a dispersive dye.

3. The ink jet printing penetrant according to claim 1 or claim 2, wherein
   the glycol-based solvent has an HSP value of 17.0 or less.

4. The ink jet printing penetrant according to any one of the preceding claims,

wherein
a content of the organic solvent with respect to a total mass of the ink jet printing penetrant is 25 to 50 percent by mass.

**5.** The ink jet printing penetrant according to any one of the preceding claims,
wherein
the cloth is a polyester cloth or a polyester blend cloth.

**6.** An ink jet printing ink set comprising:

an ink jet printing color ink containing at least one dye; and
the ink jet printing penetrant according to any one of the preceding claims.

**7.** The ink jet printing ink set according to claim 6, wherein
the ink jet printing color ink contains at least two types of the dyes.

**8.** An inkjet printing method comprising:
performing printing by adhesion of an ink jet printing color ink containing a dye and the ink jet printing penetrant according to any one of claims 1 to 5 to the cloth.


**Patentansprüche**

**1.** Tintenstrahldruckeindringungsmittel, das zum Eindringen einer Tintenstrahldruckfarbtinte, die einen Farbstoff enthält, in einen Stoff verwendet wird, wobei das Tintenstrahldruckeindringungsmittel umfasst:

mindestens ein Lösemittel auf Glykolbasis mit einem HSP-Wert von 13,6 oder mehr;
und
Wasser;
wobei
ein Gehalt des Lösemittels auf Glykolbasis in Bezug auf eine Gesamtmasse von mindestens einem organischen Lösemittel, das in dem Tintenstrahldruckeindringungsmittel enthalten ist, 95 Masseprozent oder mehr ist und der Gesamtgehalt des Lösemittels auf Glykolbasis und des anderen organischen Lösemittels in Bezug auf eine Gesamtmasse des Tintenstrahldruckeindringungsmittels 25 Masseprozent oder mehr ist;
das Lösemittel auf Glykolbasis einen Standardsiedepunkt von 243°C oder weniger aufweist;
die Anzahl der Lösemittel auf Glykolbasis mindestens zwei ist; und
das Eindringungsmittel weiter ein Tensid umfasst und der Gehalt des Tensids 0,1 bis 1,5 Masseprozent in Bezug auf die Gesamtmasse des Eindringungsmittels ist.

**2.** Tintenstrahldruckeindringungsmittel nach Anspruch 1, wobei
der Farbstoff ein dispersiver Farbstoff ist.

**3.** Tintenstrahldruckeindringungsmittel nach Anspruch 1 oder Anspruch 2, wobei
das Lösemittel auf Glykolbasis einen HSP-Wert von 17,0 oder weniger aufweist.

**4.** Tintenstrahldruckeindringungsmittel nach einem der vorstehenden Ansprüche, wobei
ein Gehalt des organischen Lösemittels in Bezug auf eine Gesamtmasse des Tintenstrahldruckeindringungsmittels 25 bis 50 Masseprozent ist.

**5.** Tintenstrahldruckeindringungsmittel nach einem der vorstehenden Ansprüche, wobei
der Stoff ein Stoff aus Polyester oder einer Polyestermischung ist.

**6.** Tintenstrahldrucktintensatz, umfassend:

eine Tintenstrahldruckfarbtinte, die mindestens einen Farbstoff enthält; und
das Tintenstrahldruckeindringungsmittel nach einem der vorstehenden Ansprüche.

**7.** Tintenstrahldrucktintensatz nach Anspruch 6, wobei
die Tintenstrahldruckfarbtinte mindestens zwei Arten des Farbstoffs enthält.

**8.** Tintenstrahldruckverfahren, umfassend:
Durchführen eines Drucks durch Adhäsion einer Tintenstrahldruckfarbtinte, die einen Farbstoff enthält, und des Tintenstrahldruckeindringungsmittels nach einem der Ansprüche 1 bis 5 an dem Stoff.

**Revendications**

**1.** Pénétrant d'impression à jet d'encre, lequel est utilisé pour faire pénétrer une encre de couleur pour impression à jet d'encre contenant un colorant dans un tissu, le pénétrant d'impression à jet d'encre comprenant :

au moins un solvant à base de glycol présentant une valeur HSP de 13,6 ou plus ;
et
de l'eau ;
dans lequel
une teneur du solvant à base de glycol par rapport à une masse totale d'au moins un solvant organique contenu dans le pénétrant d'impression à jet d'encre est de 95 pour cent en masse ou plus, et la teneur totale du solvant à base de glycol et de l'autre solvant organique par rapport à une masse totale du pénétrant d'impression à jet d'encre est de 25 pour cent en masse ou plus ;
le solvant à base de glycol présente un point d'ébullition standard de 243 °C ou moins ;
le nombre de solvants à base de glycol est d'au moins deux ; et
le pénétrant comprend en outre un tensioactif, et la teneur du tensioactif est de 0,1 à 1,5 pour cent en masse par rapport à la masse totale du pénétrant.

**2.** Pénétrant d'impression à jet d'encre selon la revendication 1, dans lequel
le colorant est un colorant dispersif.

**3.** Pénétrant d'impression à jet d'encre selon la revendication 1 ou la revendication 2, dans lequel
le solvant à base de glycol présente une valeur HSP de 17,0 ou moins.

**4.** Pénétrant d'impression à jet d'encre selon l'une quelconque des revendications précédentes, dans lequel
une teneur du solvant organique par rapport à une masse totale du pénétrant d'impression à jet d'encre est de 25 à 50 pour cent en masse.

**5.** Pénétrant d'impression à jet d'encre selon l'une quelconque des revendications précédentes, dans lequel
le tissu est un tissu en polyester ou un tissu en mélange de polyester.

**6.** Ensemble d'encres pour impression à jet d'encre comprenant :

une encre de couleur pour impression à jet d'encre contenant au moins un colorant ; et
le pénétrant d'impression à jet d'encre selon l'une quelconque des revendications précédentes.

**7.** Ensemble d'encres pour impression à jet d'encre selon la revendication 6, dans lequel
l'encre de couleur pour impression à jet d'encre contient au moins deux types des colorants.

**8.** Procédé d'impression à jet d'encre comprenant :
l'exécution d'une impression par adhésion d'une encre de couleur pour impression à jet d'encre contenant un colorant et le pénétrant d'impression à jet d'encre selon l'une quelconque des revendications 1 à 5 sur le tissu.

# FIGURE

**REFERENCES CITED IN THE DESCRIPTION**

**Patent documents cited in the description**

- JP 2016141802 A

- JP 2010255133 A